# EUROPÄISCHE PATENTSCHRIFT

(11) **EP 0 405 059 B1**
(45) Veröffentlichungstag und Bekanntmachung des Hinweises auf die Patenterteilung: **08.03.1995**
(21) Anmeldenummer: 90105846.1
(22) Anmeldetag: 27.03.1990
(51) Int. Cl.: F16H 7/00, E06B 9/68, E05F 15/16

(54) **Torblatt mit Antriebsmotoraggregat**
Door with driving motor
Porte avec moteur de commande

(30) Priorität: 12.05.1989 DE 3915637
(43) Veröffentlichungstag der Anmeldung: 02.01.1991
(73) Patentinhaber: MARANTEC ANTRIEBS- UND STEUERUNGSTECHNIK GMBH & CO. PRODUKTIONS KG, D-33428 Marienfeld (DE)
(72) Erfinder: Hörmann, Michael, Dipl.-Ing., D-4834 Marienfeld (DE)
(74) Vertreter: Flügel, Otto, Dipl.-Ing.

(56) Entgegenhaltungen:
- CH-A- 236 826
- DE-U- 7 817 731
- US-A- 3 680 622
- US-A- 4 028 964

## Beschreibung

Die Erfindung betrifft ein Torblatt mit einem Antriebsmotoraggregat, zwischen dessen Abtriebswelle und einer Welle zur Betätigung und/oder Halterung des Torblattes, insbesondere Wickelwelle für einen Rolltorpanzer oder Torsionsfederwelle für ein Deckengliedertor, für die kraftübersetzte Verbindung ein Getriebe mit einer Getriebeeingangswelle und einer Getriebeausgangswelle eingeschaltet ist. Eine derartige Anordnung entsprechend den im oberbegriff von Anspruch 1 aufgeführten Merkmalen kann als aus der US-A 3680622 bekannt gelten.

Bekannte Antriebe für solche torblattbetätigenden Wellen arbeiten mit Übersetzungsgetriebe - in Richtung Verlangsamung der Abtriebsdrehzahl -, die vor allem hinsichtlich ihres Raumbedarfes, der durch Bauart und/oder Zuordnung zum Antriebsmotoraggregat und der anzuordnenden Welle bedingt sein kann, erhebliche Probleme bereiten können, so bspw. ein Schnecken-Schneckenrad-Getriebe. Dabei ist vor allem der Raumbedarf seitlich des Torblattes bzw. der Toröffnung von Interesse, da von diesem vielfach die Einbaubarkeit eines derart ausgestatteten Tores schlechthin abhängen kann.

Getriebe mit Zwischenwellen, die je ein untereinander verdrehfestes Paar von Getrieberädern unterschiedlichen Durchmessers aufweisen und die mit endlosen ketten- oder riemenförmigen Treibgliedern in Verbindung stehen, sind grundsätzlich bekannt, so aus der US-A-4028964 im Zusammenhang mit dem Antrieb einer Ölpumpe.

Der Erfindung liegt die Aufgabe zugrunde, ein Torblatt mit einem Antriebsmotoraggregat der eingangs genannten Art zur Verfügung zu stellen, dessen Platzbedarf vor allem seitlich des Torblattes besonders klein gehalten ist.

Ausgehend von einem Torblatt mit den eingangs genannten Merkmalen wird diese Aufgabe erfindungsgemäß mit den im Anspruch 1 aufgeführten Merkmalen gelöst.

Das erfindungsgemäß ausgebildete Torblatt-Getriebe arbeitet mit einem mehrstufigen Ketten- oder Riementrieb und entsprechend aufeinanderfolgend angeordneten Getrieberädern bzw. koaxialen Getrieberäderpaaren, die aufgrund ihrer unterschiedlichen Durchmesser - es wird in Abtriebsrichtung aufeinanderfolgend immer ein Getrieberad kleineren Durchmessers mit einem solchen größeren Durchmessers mittels eines Endlos-Triebgliedes verbunden - eine stufenweise Herabsetzung der Drehzahl von der Abtriebswelle des Antriebsmotoraggregates aus gesehen hin zur Welle des Torblattes durchführen. Dabei können bevorzugt die kleineren Getrieberäder einerseits und die größeren Getrieberäder andererseits unter sich jeweils mit etwa gleichem Durchmesser ausgebildet sein, so daß die Voraussetzung geringsten Raumbedarfs in Breitenrichtung des Getrieberäderzuges gegeben ist.

In dieser bevorzugten Ausführung sind die Getrieberäderbzw. Wellenachsen in einer gemeinsamen Ebene verlaufend angeordnet, und die jeweils über die Endlos-Triebglieder verbundenen Getrieberäder erstrecken sich in derselben Ebene. Bei bevorzugt gleichem und kleinem Abstand zwischen den koaxial angeordneten und verdrehfest miteinander verbundenen - gegebenenfalls einstückig ausgebildeten - Getrieberädern der Räderpaare der Zwischenwellen erreicht man ein Minimum an Raumbedarf in Achsrichtung der Getriebewellen, so daß der seitlich des Torblattes bzw. der Toröffnung erforderliche Raumbedarf besonders klein wird.

Die bevorzugte Einfassung der Getrieberäder und damit auch der Endlos-Treibglieder in einem Getriebegehäuse schützt die bewegten Getriebeteile gegen Eingriff und Verschmutzung und dient zugleich einer einfachen und raumsparenden Lagerung der Getriebewellen.

Das bei Anlauf des Antriebsmotoraggregates auf die Torblattwelle übertragene Drehmoment führt aufgrund der Trägheitskraft und des Bewegungswiderstandes des Torblattes zu einer Reaktionskraft, die eine Schwenkbewegung des Getriebes hervorzurufen sucht. In gleicher Weise tritt eine Reaktionskraft auf das Getriebe auf, wenn das Torblatt im Zuge seines Bewegungsablaufs auf einen unvorhergesehenen Widerstand trifft - sei es durch ein Klemmen in der Führung oder aber durch einen in der Torblattbewegungsbahn befindlichen Gegenstand - und daher zumindest zunächst den Lauf des Antriebsmotoraggregates nicht unterbricht. Diese Reaktionskräfte werden in besonders bevorzugter Ausführung der Erfindung dazu ausgenutzt, das Getriebe bzw. das Getriebegehäuse dämpfend abzustützen und/oder einen Kraftschwellwert vorzugeben, bei dessen Überschreiten ein Überlastsignal ausgelöst wird, das zur Abschaltung oder Bewegungsumkehrschaltung des Antriebsmotoraggregates führt. Ein solcher Schwellwert kann durch die Kraft einer Feder bzw. deren elastischen Verformungsweg in an sich bekannter Weise definiert werden. Die vorerwähnte Dämpfung kann durch einen Teilbereich des Verformungsweges der Feder gebildet sein oder durch ein gesondertes elastisches Dämpfungsglied an sich bekannter Bauart verwirklicht werden.

In besonders bevorzugter Ausführung sind die Endlos-Treibglieder als Endlos-Rollenketten ausgebildet und die Getrieberäder entsprechend als Kettenräder. Es kommen aber auch bandförmige Riementriebe in Betracht, insbesondere solche, die mit einer Verzahnung versehen sind und damit schlupffrei arbeiten.

Diese und weitere bevorzugte Ausführungen ergeben sich aus den Unteransprüchen, insbesondere im Zusammenhang mit dem in der Zeichnung wiedergegebenen Ausführungsbeispiel dessen nachstehende Beschreibung die Erfindung näher erläutert. Es zeigen:
- Figur 1: eine schematisierte Ansicht in Achsrichtung auf das Getriebe gemäß Ausführungsbeispiel, wobei sämtliche Räder und Wellen ungeachtet ihrer tatsächlichen Abdeckung in vollen Linien wiedergegeben sind, während die jeweils zwei Kettenräder verbindenden Endlos-Rollenketten durchgehend strichpunktiert wiedergegeben sind;
- Figur 2: einen schematisierten Schnitt nach der Linie II-II in Figur 1.

Das insgesamt mit 1 bezeichnete Getriebe weist ein Gehäuse auf, das aus zwei zumindest annähernd identischen Halbschalen 2 und 3 besteht und mittels nicht näher bezeichneter Schrauben zusammengehalten wird. Die beiden Halbschalen 2 und 3 liegen im Bereich einer Trennfuge 4 aneinander, die etwa durch die Mitte des Gehäuseinnenraumes und senkrecht zur Achsrichtung der in dem Gehäuse aufgenommenen drehbaren Getriebeteile verläuft.

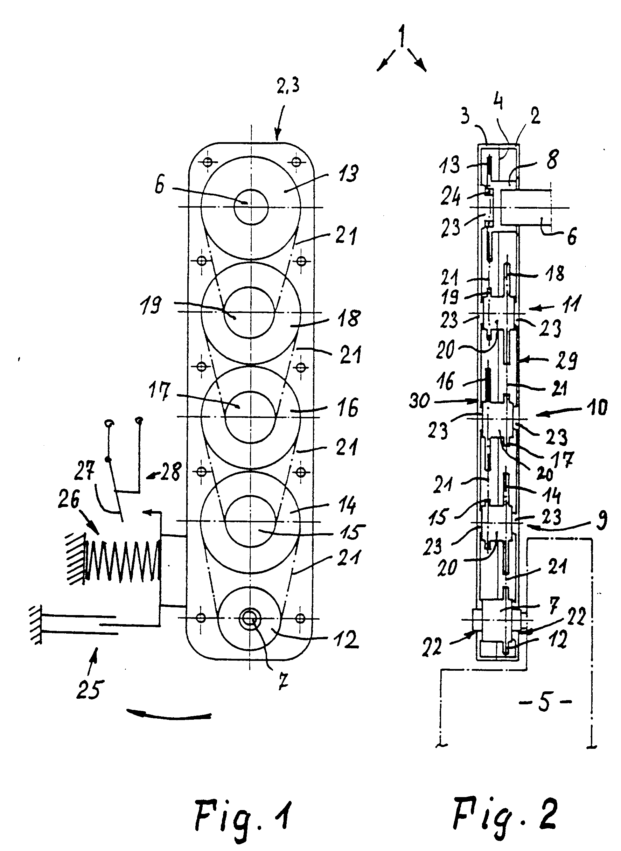

Im in der bildlichen Wiedergabe des Ausführungsbeispieles unteren Bereichs des Gehäuses ist eine Getriebeeingangswelle 7, und im bildlich oberen Bereich eine Getriebeausgangswelle 6 angedeutet. Die Getriebeausgangswelle 6 ist mit der Wickelwelle oder Torsionsfederwelle eines Torblattes verbunden bzw. ist - wie aus Figur 2 ersichtlich - ein Teil dieser Welle, der in den Gehäuseinnenraum hineinragt und mit der eigentlichen Getriebeausgangswelle 8 innerhalb des Gehäuses verdrehfest in Verbindung steht. Die Getriebeingangswelle 7 ist in nicht näher dargestellter Weise an die Abtriebswelle des lediglich angedeuteten Antriebsmotoraggregates 5 angeschlossen bzw. ein Teil von dieser.

Zwischen der Getriebeeingangswelle 7 und der Getriebeausgangswelle 8 sind übereinanderliegend drei Zwischenwellen 9, 10 und 11 angeordnet. An der Nabe der Getriebeeingangswelle 7 ist ein erstes Kettenrad 12 kleineren Durchmessers verdrehfest angeordnet bzw. ausgebildet, das in der Nähe der dem motorseitigen Anschluß zugewandten Schalenbreitseite 29 dem Gehäuseteils 2 liegt. An der Getriebeausgangswelle 8 ist ein Kettenrad größeren Durchmessers 13 verdrehfest angeordnet bzw. ausgebildet, das in der Nähe der Schalenbreitseite des anderen Gehäuseteils 3 liegt. Die Zwischenwellen 9 bis 11 tragen jeweils Paare von Kettenrädern 14, 15/16, 17/18, 19 deren eines ein solches kleineren Durchmessers 15, 17, 19 und deren anderes ein solches größeren Durchmessers 14, 16, 18 ist. Die Kettenräderpaare 14, 15 und 16, 17 sowie 18, 19 sind jeweils koaxial auf einer beiden Rädern gemeinsamen Nabe 20 verdrehfest angeordnet bzw. ausgebildet. Die Anordnung ist derart getroffen, daß das größere Kettenrad 14 der der Eingangswelle 7 benachbarten ersten Zwischenwelle 9 auf das Kettenrad 12 der Welle 7 ausgerichtet bzw. in ein und derselben Umlaufebene liegt. Das Kettenrad 15 kleineren Durchmessers der ersten Zwischenwelle ist von dem größeren Rad 14 axial mit kleinem Abstand versetzt angeordnet und verläuft in einer Ebene mit dem Kettenrad 16 größeren Durchmessers der nach oben hin in Richtung auf die Ausgangeswelle 8 hin nächstfolgenden Zwischenwelle 10. Das dem Kettenrad 16 koaxial und wiederum mit demselben Abstand wie demjenigen zwischen den Kettenrädern 14 und 15 zur Bildung eines Paares zugeordnete Kettenrad 17 kleineren Durchmessers verläuft in einer Ebene mit dem Kettenrad 18 der letzten in Richtung auf die Welle 8 folgenden Zwischenwelle 11. Das dem Kettenrad größeren Durchmessers 18 zugeordnete Kettenrad 19 kleineren Durchmessers - wiederum mit gleichem axialem Abstand zur Bildung eines verdrehfesten Paares an der gemeinsamen Nabe 20 verläuft in einer Ebene mit dem Kettenrad 13 größeren Durchmessers der Getriebeausgangswelle 8. Dabei liegen die Achsen sämtlicher Wellen 7 bis 11 in einer Ebene. Von der Getriebeeingangswelle 7 aus gesehen in Richtung der Ausgangswelle 8 sind immer ein Getrieberad kleineren Durchmessers und ein in gleicher Ebene benachbartes Getrieberad großen Durchmessers miteinander über eine Endloskette 21 verbunden. Dadurch ergeben sich folgende in Abtriebsrichtung über Ketten miteinander im Sinne einer stufenweisen Kraftübersetzung arbeitenden Kettenräderpaare: 12, 14; 15, 16; 17, 18 und 19, 13.

Aufgrund der gleichen Abstände zwischen den jeweiligen Kettenräderpaaren je Zwischenwelle und der Ausrichtung der jeweils durch Rollenketten 21 miteinander verbundenen Kettenräder erhält man eine Anordnung, in welcher sämtliche Kettenräder und Endlosketten in zwei verhältnismäßig gering voneinander beabstandeten Ebenen verlaufen. Wie Figur 2 erkennen läßt, wird das Getriebe dadurch in Wellenachsrichtung gesehen besonders schmal, so daß der Platzbedarf an der entsprechenden Seite des Torblattes entsprechend gering ist.

In der dargestellten bevorzugten Ausführung dienen die Gehäuseteile 2 und 3 zugleich der Lagerung der Wellen, und zwar zum Teil durch Lagerausbildungen in den einander gegenüberliegenden Schalenbreitseiten 29 und 30 der Gehäuseteile 2 und 3, zum Teil aber auch durch aufeinander zu gerichtete Zapfen, die innenseitig der Schalenbreitseiten 29 und 30 ausgebildet sind und in die Naben 20 der Zwischenwellen 9 bis 11 eingreifen. Während die Eingangswelle 7 in zwei Gehäuseöffnungen 22 eingreift, ist die Getriebeausgangswelle 8 einseitig an einem Zapfen 23 der Schalenbreitseite 30 des Gehäuseteils 3 über ein Lager 24 abgestützt, während andererseits ein Endteil 6 der Wickel- bzw. Torsionswelle in eine entsprechende Ausnehmung der Getriebeausgangswelle 8 eingreift. Damit ist insgesamt das Gehäuse 2, 3 und damit das Gesamtgetriebe um die Achse der Welle 6 verschwenkbar gelagert. Das Antriebsmotoraggregat 5 ist von der Getriebeeingangswelle 7 getragen und damit an das Gehäuse 2, 3 angeschlossen. Bei Anlauf des Antriebsmotoraggregates 5 ergibt sich aufgrund der Trägheit des Torblattes eine Reaktionskraft, die zu einer Verschwenkbewegung des Getriebes 1 um die Achse der Welle 6 führt. Um eine solche je nach Antrieb stoßartig in Erscheinung tretende Kraft gedämpft aufzunehmen, erfolgt eine solche Verschwenkbewegung des Getriebes 1 und damit des Gehäuses 2, 3 gegen ein in Figur 1 schematisch wiedergegebenes Dämpfungselement 25. Erleidet andererseits das Torblatt im Zuge seiner Bewegung eine Behinderung, sei es durch die Torblattführung, sei es durch Anlaufen auf ein Hindernis, so entsteht widerum eine Reaktionskraft die zu einer Verschwenkbewegung des Getriebes 1 führt. Da es sich hierbei nicht nur um die Überwindung eines Anlaufmomentes handelt, ist der Ausschlag dieser Verschwenkbewegung entsprechend größer und wird - wie in Figur 1 schematisch angeordnet - zur Betätigung eines Überlastschalters 28 ausgenutzt. Während im Falle eines Anlaufmomentes das Gehäuse gegen die Kraft einer Druckfeder, wie schematisch in Figur 1 wiedergegeben, nur über einen geringen Weg verschwenkt, und zwar gegen den Widerstand des schematisch angedeuteten Dämpfungselementes 25, wird im Falle eines Hindernisses unter der Kraft des weiterlaufenden Motorantriebsaggregates 5 die Feder 26 weiter zusammengedrückt, bis ein gehäusefestes Teil das Betätigungsglied 27 des Überlastschalters 28 erreicht und damit - hier unter Öffnen eines Ruheschalters - das Antriebsmotoraggregat 5 abschaltet und/oder eine andere Sicherung auslöst.

## Patentansprüche

1. Torblatt mit einem Antriebsmotoraggregat, zwischen dessen Abtriebswelle und einer Welle zur Betätigung und/oder Halterung des Torblattes, insbesondere Wickelwelle für einen Rolltorpanzer oder Torsionsfederwelle für ein Deckengliedertor, für die kraftübersetzte Verbindung ein Getriebe (1) mit einer Getriebeeingangswelle (7) und einer Getriebeausgangswelle (8) eingeschaltet ist,
**dadurch gekennzeichnet**,
daß die Getriebeeingangswelle (7) und die Getriebeausgangswelle (8) je ein Getrieberad (12, 13) aufweisen, daß zwischen der Getriebeeingangswelle (7) und der Getriebeausgangswelle (8) eine oder mehrere Zwischenwellen (9, 10, 11) angeordnet sind, die je ein untereinander verdrehfestes Paar von Getrieberädern (14, 15/16, 17/18, 19) unterschiedlichen Durchmessers aufweisen, und daß von der Getriebeeingangswelle (7) aus gesehen jeweils ein Getrieberad kleineren Durchmessers (12, 15, 17, 19) mit einem Getrieberad größeren Durchmessers (14, 16, 18, 13) der im Getriebezug nächstfolgenden Welle (9, 10, 11, 8) über ein diese beiden Getrieberäder (12, 14/15, 16/17, 18/19, 13) umschlingendes endlos ketten- oder riemenförmiges Treibglied (21) in Verbindung steht.

2. Torblatt nach Anspruch 1,
**dadurch gekennzeichnet**,
daß die Achsen aller Wellen (7 bis 11) etwa in einer Ebene und parallel verlaufend angeordnet sind.

3. Torblatt nach Anspruch 1 oder 2,
**dadurch gekennzeichnet**,
daß die axialen Abstände zwischen den Getrieberädern (14, 15/16, 17/18, 19) eines jeden Paares von Getrieberädern gleich groß bemessen sind.

4. Torblatt nach einem der Ansprüche 1 bis 3,
**dadurch gekennzeichnet**,
daß jedes auf einer Zwischenwelle (9 bis 11) angeordnete Paar von Getrieberädern (14, 15/16, 17/18, 19) mit einstückiger Nabe (20) ausgebildet ist.

5. Torblatt nach einem der Ansprüche 1 bis 4,
**dadurch gekennzeichnet**,
daß sämtliche Getrieberäder (12 bis 19) innerhalb eines Getriebegehäuses (2, 3) angeordnet sind.

6. Torblatt nach Anspruch 5,
**dadurch gekennzeichnet**,
daß das Getriebegehäuse (2, 3) aus zwei Gehäuseschalen zusammengesetzt ist, deren Trennfuge (4) in einer die Wellenachsen etwa senkrecht schneidenden Ebene verläuft.

7. Torblatt nach Anspruch 5 oder 6,
**dadurch gekennzeichnet**,
daß die Wellen (7 bis 11) an den einander gegenüberliegenden Wandungen (29, 30) des Getriebegehäuses (2, 3) drehbar gelagert sind.

8. Torblatt nach Anspruch 7,
**dadurch gekennzeichnet**,
daß in die Naben (20) der Paare von Getrieberädern (14, 15/16, 17/18, 19) der Zwischenwellen (9 bis 11) diese bildend Lagerzapfen (23) eingreifen, die einstückig an den Getriebegehäusewandungen (29, 30) ausgebildet sind.

9. Torblatt nach einem der Ansprüche 1 bis 8,
**dadurch gekennzeichnet**,
daß die Gesamtheit der Getrieberäder (12 bis 19) etwa senkrecht zu ihren Drehachsen, insbesondere das die Getrieberäder (12 bis 19) aufnehmende Getriebegehäuse (2, 3), um eine Achse, vorzugsweise diejenige der Wickel- oder Torsionsfederwelle (6), verdrehbar gelagert und durch Reaktionskraft des zu betätigenden Torblattes gegen ein Dämpfungsglied (25) und/oder eine Feder (26) verschwenkbar ist, an deren Federungswegendbereich ein Betätigungsglied (27) eines Überlastschalters (28) angeordnet ist.

10. Torblatt nach Anspruch 9,
**dadurch gekennzeichnet**,
daß das Antriebsmotoraggregat (5) mit um die Achse der Wickel- oder Torsionswelle (6) verschwenkbar an die Getriebeeingangswelle (7) angeschlossen ist.

11. Torblatt nach einem der Ansprüche 1 bis 10,
**dadurch gekennzeichnet**,
daß die Treibglieder als Endlos-Rollenketten (21) und die Getrieberäder als Kettenräder (12 bis 19) ausgebildet sind.

## Claims

1. A doorleaf having a driving motor unit, a gear (1) with an input shaft (7) and an output shaft (8) being connected for power transmission between the driven shaft of said driving motor unit and a shaft for actuating and/or securing the doorleaf, more particularly a winding shaft for an armoured roller door or torsion spring shaft for an overhead sectional door, characterised in that the gear input shaft (7) and the gear output shaft (8) each have a gear wheel (12, 13), in that one or more intermediate shafts (9, 10, 11) are arranged between the gear input shaft (7) and the gear output shaft (8), which intermediate shafts each have a pair of gear wheels (14, 15/16, 17/18, 19) which are non-rotational, relative to one another, and have different diameters, and in that, when viewed from the gear input shaft (7), a gear wheel of a smaller diameter (12, 15, 17, 19) is, in each case, connected with a gear wheel of a larger diameter (14, 16, 18, 13) of the shaft (9, 10, 11, 8) next in the gear train, via a drive member (21) in the form of a chain or belt which is continuously wound round these two gear wheels (12, 14/15, 16/17, 18/19, 13).

2. A doorleaf according to claim 1, characterised in that the axes of all the shafts (7 to 11) are arranged so as to extend substantially in a plane and in parallel.

3. A doorleaf according to claim 1 or 2, characterised in that the axial spacings between the gear wheels (14, 15/16, 17/18, 19) of each pair of gear wheels are identical.

4. A doorleaf according to one of claims 1 to 3, characterised in that each pair of gear wheels (14, 15/16, 17/18, 19) arranged on an intermediate shaft (9 to 11) are constructed with an integral boss (20).

5. A doorleaf according to one of claims 1 to 4, characterised in that all the gear wheels (12 to 19) are arranged within a gear housing (2, 3).

6. A doorleaf according to claim 5, characterised in that the gear housing (2, 3) is assembled from two housing shells, the separating line (4) of which extends in a plane which cuts the shaft axes substantially at right angles.

7. A doorleaf according to claim 5 or 6, characterised in that the shafts (7 to 11) are rotatably mounted on opposing walls (29, 30) of the shaft housing (2, 3).

8. A doorleaf according to claim 7, characterised in that pivot pins (23) engage in the bosses (20) of the pairs of gear wheels (14, 15/16, 17/18, 19) to form the intermediate shafts (9 to 11), said pivot pins being integrally formed on the walls (29, 30) of the gear housing.

9. A doorleaf according to one of claims 1 to 8, characterised in that all the gear wheels (12 to 19), more particularly the gear housing (2, 3) receiving the gear wheels (12 to 19), are mounted substantially at right angles with respect to the rotational axes of the gear wheels, so as to be rotatable about an axis, preferably that of the winding or torsion spring shaft (6), and tiltable towards a damping member (25) and/or a spring (26), as a result of the reaction force of the doorleaf to be actuated, an actuating member (27) of an overload switch (28) being arranged on the end region of the deflection path of said spring.

10. A doorleaf according to claim 9, characterised in that the drive motor unit (5) is connected to the gear input shaft (7) so as to be rotatable about the axis of the winding or torsion shaft (6).

11. A doorleaf according to one of claims 1 to 10, characterised in that the driving members are in the form of continuous roller chains (21) and the gear wheels are in the form of chain wheels (12 to 19).

## Revendications

1. Panneau de porte avec un ensemble moteur d'entraînement, comportant entre son arbre de sortie et un arbre servant à actionner et/ou à maintenir le panneau de porte, en particulier un arbre d'enroulement pour un blindage de porte roulante ou un arbre à ressort de torsion pour une porte à éléments suspendus, une transmission (1) avec un arbre d'entrée de transmission (7) et un arbre de sortie de transmission (8) qu'on monte pour la liaison de démultiplication,, panneau de porte caractérisé en ce que l'arbre d'entrée de transmission (7) et l'arbre de sortie de transmission (8) présentent respectivement une roue de transmission (12, 13) , en ce qu'entre l'arbre d'entrée de transmission (7) et l'arbre de sortie de la transmission (8), on dispose un ou plusieurs arbres intermédiaires (9, 10, 11) qui présentent respectivement une paire de roues de transmission (14, 15/16, 17/18 et 19) de diamètres différents qui sont solidaires en rotation les unes des autres , et en ce qu'une roue de transmission de plus petit diamètre (12, 15, 17, 19), vue à partir de l'arbre d'entrée de transmission (7), est en liaison avec une roue de transmission de plus grand diamètre (14, 16, 18, 13) de l'arbre (9, 10, 11, 8) qui suit immédiatement dans le train de transmission, au moyen d'un organe d'entraînement (21) qui entoure ces deux roues de transmission (12, 14/15, 16/17, 18, 19, 13) en ayant la forme d'une courroie ou d'une chaîne sans fin.

2. Panneau de porte selon la revendication 1, caractérisé en ce que les axes de tous les arbres (7 à 11) sont disposés à peu près dans un plan et s'étendent parallèlement.

3. Panneau de porte selon la revendication 1 ou 2, caractérisé en ce que les écartements axiaux entre les roues de transmission (14, 15/16, 17/18, 19) de chacune des paires de roues de transmission, ont la même dimension.

4. Panneau de porte selon l'une des revendications 1 à 3, caractérisé en ce que chaque paire, disposée sur un arbre intermédiaire (9 à 11), de roues de transmission (14, 15/16, 17/18, 19) est constituée avec un moyeu d'une seule pièce (20).

5. Panneau de porte selon l'une des revendications 1 à 4, caractérisé en ce que l'ensemble des roues de transmission (12 à 19) est disposé à l'intérieur d'un carter de transmission (2, 3).

6. Panneau de porte selon la revendication 5, caractérisé en ce que le carter de transmission (2, 3) est composé de deux coquilles de carter dont le joint de séparation (4) s'étend dans un plan qui recoupe les axes d'arbres à peu près perpendiculairement.

7. Panneau de porte selon la revendication 5 ou 6, caractérisé en ce que les arbres (7 à 11) sont montés de façon à pouvoir tourner sur les parois (29, 30), situées l'une en face de l'autre, du carter de transmission (2, 3).

8. Panneau de porte selon la revendication 7, caractérisé en ce que, dans les moyeux (20) des paires de roues de transmission (14, 15/16, 17/18, 19) des arbres intermédiaires (9 à 11), ceux-ci viennent en prise en formant des tenons de support (23) qui sont constitués d'une seule pièce sur les parois (29, 30) du carter de transmission.

9. Panneau de porte selon l'une des revendications 1 à 8, caractérisé en ce que la totalité des roues de transmission (12 à 19) à peu près perpendiculaire aux axes de rotation, et en particulier le carter de la transmission recevant les roues de transmission (12 à 19), est monté de façon à pouvoir tourner autour d'un axe, de préférence celui de l'arbre d'enroulement ou de l'arbre à ressort de torsion (6), et peut pivoter sous l'action des forces de réaction du panneau de porte à actionner, contre un organe amortisseur (25) et/ou un ressort (26) sur la zone de trajet de compression élastique duquel est disposé un organe d'actionnement (27) d'un interrupteur de surcharge (28).

10. Panneau de porte selon la revendication 9, caractérisé en ce que l'ensemble moteur d'entraînement (5) est raccordé, de façon à pouvoir pivoter autour de l'axe de l'arbre d'enroulement ou de l'arbre de torsion (6), à l'arbre d'entrée de transmission (7).

11. Panneau de porte selon l'une des revendications 1 à,10, caractérisé en ce que les éléments d'entraînement sont constitués sous la forme de chaînes à rouleaux sans fin (21), et les roues d'entraînement sous la forme de roues à chaînes (12 à 19).
